# EUROPEAN PATENT APPLICATION

(11) **EP 4 203 101 A1**
(43) Date of publication of application: **28.06.2023**
(21) Application number: 21941656.7
(22) Date of filing: 01.11.2021
(51) Int. Cl.: H01M 4/36, H01M 4/48, H01M 4/485, H01M 10/0525

(54) **COMPOSITE NEGATIVE ELECTRODE MATERIAL AND PREPARATION METHOD THEREFOR, NEGATIVE ELECTRODE MATERIAL AND LITHIUM ION BATTERY**

(30) Priority: 13.05.2021 CN 202110520487
(71) Applicant: SVOLT ENERGY TECHNOLOGY CO., LTD, Changzhou, Jiangsu 213200 (CN)
(72) Inventor: XU, Xinpei, hangzhou, Jiangsu 213200 (CN); JIANG, Weijun, hangzhou, Jiangsu 213200 (CN); CHEN, Sixian, hangzhou, Jiangsu 213200 (CN); ZHENG, Xiaoxing, hangzhou, Jiangsu 213200 (CN); WANG, Pengfei, hangzhou, Jiangsu 213200 (CN); SHI, Zetao, hangzhou, Jiangsu 213200 (CN)
(74) Representative: Glawe, Delfs, Moll
(86) International application number: PCT/CN2021/127974
(87) International publication number: WO 2022/237091

(57) **Abstract**

The disclosure provides a composite anode electrode material and a preparation method thereof, an anode electrode material and a lithium ion battery. The composite anode electrode material includes a defect-type transition metal oxide and a lithium titanate, wherein the lithium titanate is compounded with the defect-type transition metal oxide in the manner of coating and/or doping, the defect-type transition metal oxide is a secondary particle, and a transition metal element in the defect-type transition metal oxide is selected from any one of tungsten, yttrium and tin. On the one hand, the present application uses the lithium titanate to coat and dope the defect-type transition metal oxide, so that the probability of a side reaction between the defect-type transition metal oxide and an electrolyte is greatly reduced. On the other hand, the "zero strain" of the lithium titanate greatly reduces a volume expansion effect of an anode electrode of a battery in the process of deintercalating lithium ions, thereby the stability of the composite anode electrode material is further improved, and the lithium ion battery including the composite anode electrode material has a higher capacity retention rate after cycling.

## Description

### Technical Field

The present disclosure relates to the technical field of lithium ion batteries, in particular to a composite anode electrode material and a preparation method thereof, an anode electrode material and a lithium ion battery.

### Background

Lithium ion batteries have high energy density and excellent cycle performance, and are widely used in the fields of automotive, electronic industry and the like. During the operation of a lithium ion battery, lithium ions move back and forth between a positive electrode and an anode electrode, and in order to achieve an electrochemical balance, an external circuit generates a current. Wherein, the positive electrode and the anode electrode play the role of intercalation and deintercalation of the lithium ions. Therefore, the accommodating effect of the anode electrode on the lithium ions determines the performance of the lithium ion battery.

At present, anode electrode materials that are already commercialized are generally carbon materials (graphite, soft carbon, hard carbon and the like). However, as a common anode electrode material, the graphite material just has the theoretical capacity of 372 mAh/g, the low ability to accommodate the lithium ions, and the poor compatibility with organic solvents. Thus, it is easy to react with an electrolyte so as to reduce the deintercalation ability of the lithium ions. The theoretical capacity of a silicon-based material is as high as 4200 mAh/g, but the volume expansion and contraction in the process of lithium ion deintercalation are relatively serious, thus it is easy to cause damage to a material structure and mechanical pulverization, thereby it shows the poorer cycle performance. Although transition metal oxides have the advantages of the better theoretical capacity and abundant sources, there is also a problem of poorer conductivity. Although defect-type transition metal oxides are used to improve the conductivity of the transition metal oxides in an existing technology, the improvement of conductivity is limited, and due to the improved activity of the defect-type transition metal oxides, it is prone to generate other side reactions in the electrolyte, so that the overall electrical performance of the lithium ion battery is relatively poor.

### Summary

A main purpose of the present disclosure is to provide a composite anode electrode material and a preparation method thereof, an anode electrode material and a lithium ion battery, as to solve a problem in an existing technology that a lithium ion battery using a transition metal oxide as an anode electrode material is relatively poor in capacity retention rate after cycling.

In order to achieve the above purpose, according to one aspect of the present disclosure, a composite anode electrode material is provided, and the composite anode electrode material includes a defect-type transition metal oxide and a lithium titanate, wherein the lithium titanate is compounded with the defect-type transition metal oxide in the manner of coating and/or doping, the defect-type transition metal oxide is a secondary particle, and a transition metal element in the defect-type transition metal oxide is selected from any one of tungsten, yttrium and tin.

Further, the mass ratio of the above defect-type transition metal oxide to the lithium titanate is 1 :0.005-1:0.03.

Further, the above defect-type transition metal oxide is selected from any one of a defect-type tungsten oxide, a defect-type yttrium oxide, and a defect-type tin oxide.

Further, a chemical formula of the defect-type tungsten oxide is selected from any one or more of WO_{2.72}, WO_{2.9}, Y₂O_{3.12}, and SnO_{2.14}.

Further, the average particle size of the above composite anode electrode material is 2.0-5.0 µm.

Further, the specific surface area of the composite anode electrode material is 15.0-50.0 m²/g.

Further, the average particle size of the above secondary particles is 2.0-5.0 µm, and the secondary particle of the defect-type transition metal oxide is formed by agglomeration of primary particles.

Further, the average particle size of the primary particles is 200-500 nm.

Further, the average particle size of the above lithium titanate is 100-300 nm.

According to one aspect of the present disclosure, a preparation method for the above composite anode electrode material is provided, and the preparation method includes: dry-mixing a defect-type transition metal oxide and a lithium titanate, to obtain the composite anode electrode material, wherein the defect-type transition metal oxide is a secondary particle.

Further, stirring is performed in the process of dry-mixing, and the stirring rotation speed is 2000-3000 r/min.

Further, the stirring time is 10-20 min.

According to another aspect of the present disclosure, an anode electrode material is provided, and the anode electrode material includes the above composite anode electrode material.

According to another aspect of the present disclosure, a lithium ion battery is provided, and includes an anode electrode piece, wherein the anode electrode piece includes the above anode electrode material.

A technical scheme of the present disclosure is applied, the electrical conductivity of the defect-type transition metal oxide is improved compared with the corresponding conventional transition metal oxide, but it also has the higher chemical activity at the same time due to the crystal distortion of the defect-type transition metal oxide, thereby it is easy to perform a side reaction with an electrolyte so that the electrical performance of the lithium ion battery is affected. On the one hand, the present application uses the lithium titanate to coat and dope the defect-type transition metal oxide so that the structure of the defect-type transition metal oxide is more stable, and the coated lithium titanate reduces the area of the defect-type transition metal oxide that is in direct contact with the electrolyte, thereby the probability of a side reaction between the defect-type transition metal oxide and the electrolyte is greatly reduced. On the other hand, the "zero strain" of the lithium titanate greatly reduces the volume expansion effect of an anode electrode of a battery in the process of deintercalating lithium ions, thereby the stability of the composite anode electrode material is further improved, and the lithium ion battery including the composite anode electrode material has a higher capacity retention rate after cycling.

### Brief Description of the Drawings

Drawings constituting a part of the present application are used to provide further understanding of the present disclosure, and exemplary embodiments of the present disclosure and descriptions thereof are used to explain the present disclosure, and do not constitute improper limitation to the present disclosure. In the drawings:
Fig. 1 shows a scanning electron microscope (SEM) diagram of WO_{2.72} provided in Embodiment 1 of the present application.
Fig. 2 shows an SEM diagram of a composite anode electrode material provided in Embodiment 1 of the present application.
Fig. 3 shows an energy spectrum analysis diagram of WO_{2.72} provided in Embodiment 1 of the present application.
Fig. 4 shows an energy spectrum analysis diagram of the composite anode electrode material provided in Embodiment 1 of the present application.
Fig. 5 shows a diagram of a capacity retention rate after cycling of the composite anode electrode material in Embodiment 1 of the present application and an anode electrode material provided in Conparative example 1.

### Detailed Description of the Embodiments

It should be noted that embodiments in the present application and features of the embodiments may be combined with each other in the case without conflicting. The present disclosure is described in detail below with reference to the drawings and in combination with the embodiments.

As analyzed in the background, there is a problem in an existing technology that a lithium ion battery using a transition metal oxide as an anode electrode material is relatively poor in capacity retention rate after cycling. In order to solve this problem, the present disclosure provides a composite anode electrode material and a preparation method thereof, an anode electrode material and a lithium ion battery.

In a typical embodiment of the present application, a composite anode electrode material is provided, and the composite anode electrode material includes a defect-type transition metal oxide and a lithium titanate, wherein the lithium titanate is compounded with the defect-type transition metal oxide in the manner of coating and/or doping, the defect-type transition metal oxide is a secondary particle, and a transition metal element in the defect-type transition metal oxide is selected from any one of tungsten, yttrium and tin.

The electrical conductivity of the defect-type transition metal oxide is improved compared with the corresponding conventional transition metal oxide, but it also has the higher chemical activity at the same time due to the crystal distortion of the defect-type transition metal oxide, thereby it is easy to perform a side reaction with an electrolyte so that the electrical performance of the lithium ion battery is affected. On the one hand, the present application uses the lithium titanate to coat and dope the defect-type transition metal oxide so that the structure of the defect-type transition metal oxide is more stable, and the coated lithium titanate reduces the area of the defect-type transition metal oxide that is in direct contact with the electrolyte, thereby the probability of a side reaction between the defect-type transition metal oxide and the electrolyte is greatly reduced. On the other hand, the "zero strain" of the lithium titanate greatly reduces the volume expansion effect of an anode electrode of a battery in the process of deintercalating lithium ions, thereby the stability of the composite anode electrode material is further improved, and the lithium ion battery including the composite anode electrode material has a higher capacity retention rate after cycling.

In an embodiment of the present application, the mass ratio of the above defect-type transition metal oxide to the lithium titanate is 1:0.005-1:0.03.

The addition amount of the lithium titanate is too much, so that the electrical conductivity of the composite anode electrode material too poor, and the addition amount of the lithium titanate is too less, so that the improvement of electrical properties such as the cycle stability of the composite anode electrode material is too small. The defect-type transition metal oxide and the lithium titanate are preferably in the above ratio, so that the two may have the more sufficient synergistic effect, as to obtain the anode electrode material with the optimized comprehensive performance.

In order to further improve the synergistic effect between the defect-type transition metal oxide and the lithium titanate, and obtain the more diverse composite anode electrode material, preferably the above defect-type transition metal oxide is selected from any one of a defect-type tungsten oxide, a defect-type yttrium oxide, and a defect-type tin oxide. The above defect-type transition metal oxides may adopt a currently existing commercial defect-type transition metal oxide or each defect-type transition metal oxide prepared by a preparation method disclosed in a technical document. In some embodiments of the present application, a chemical formula of the defect-type tungsten oxide used is selected from any one or more of WO_{2.72}, WO_{2.9}, Y₂O_{3.12} and SnO_{2.14}.

Herein, in order to improve the preparation efficiency of the defect-type tungsten oxide WO_{2.72}, a preparation method thereof is preferably as follows: in a rotary furnace, a tungsten source of a ammonium paratungstic acid (the feeding speed is 50-100 g/min) is used as a raw material, and NH₃ (2-10 L/min) is fed to generate H₂ at a temperature of 750-810°C (the heating rate is 2-5 °C/min) so that the paratungstic acid may be reduced to a defect-type purple tungsten oxide (WO_{2.72}), herein the tungsten source is selected from any one of an ammonium metatungstate, an ammonium paratungstate, and an ammonium tungstate, and the rotation speed of a furnace tube is 2 rpm. Certainly, those skilled in the art may also prepare WO_{2.72} with reference to other preparation methods in the existing technology, and it is not repeatedly described here.

In an embodiment of the present application, the average particle size of the above composite anode electrode material is 2.0-5.0 µm, and preferably the specific surface area of the composite anode electrode material is 15.0-50.0 m²/g.

The average particle size and the specific surface area of the composite anode electrode material may affect the contact area between the composite anode electrode material and the electrolyte. The surface area of the composite anode electrode material is larger, and its reaction activity is better. Therefore, the specific surface area of the composite anode electrode material is larger, and the probability of the side reaction caused possibly is higher, but the specific surface area of the composite anode electrode material is smaller, the ion exchange between the composite anode electrode material and the electrolyte may be affected to a certain extent. Preferably, the composite anode electrode material is in the above parameter range so that the composite anode electrode material may have the more suitable reaction activity.

In order to make the average particle size of the lithium titanate better match the particle size of the defect-type transition metal oxide, and make it coat and dope the defect-type transition metal oxide as much as possible, as to improve the improvement effect on the defect-type transition metal oxide, the average particle size of the above secondary particles is preferably 2.0-5.0 µm, the secondary particle of the defect-type transition metal oxide is formed by agglomeration of primary particles, and the average particle size of the primary particles is preferably 200-500 nm.

In an embodiment of the present application, the average particle size of the above lithium titanate is 100-300 nm.

The lithium titanate in the above average particle size range is more beneficial to interact with the defect-type transition metal oxide, as to coat and dope the defect-type transition metal oxide, so that it is modified.

In another typical embodiment of the present application, a preparation method for a composite anode electrode material is provided, and the preparation method includes: dry-mixing a defect-type transition metal oxide and a lithium titanate, to obtain a composite anode electrode material, herein the defect-type transition metal oxide is a secondary particle.

The electrical conductivity of the defect-type transition metal oxide is improved compared with the corresponding conventional transition metal oxide, but it also has the higher chemical activity at the same time due to the crystal distortion of the defect-type transition metal oxide, thereby it is easy to perform a side reaction with an electrolyte so that the electrical performance of the lithium ion battery is affected. By dry-mixing, the defect-type transition metal oxide is coated and doped with the lithium titanate. Thus on the one hand, the present application uses the lithium titanate to coat and dope the defect-type transition metal oxide so that the structure of the defect-type transition metal oxide is more stable, and the coated lithium titanate reduces the area of the defect-type transition metal oxide that is in direct contact with the electrolyte, thereby the probability of a side reaction between the defect-type transition metal oxide and the electrolyte is greatly reduced. On the other hand, the "zero strain" of the lithium titanate greatly reduces the volume expansion effect of an anode electrode of a battery in the process of deintercalating lithium ions, thereby the stability of the composite anode electrode material is further improved, and the lithium ion battery including the composite anode electrode material has a higher capacity retention rate after cycling.

In order to make the defect-type transition metal oxide and the lithium titanate mix more uniformly, stirring is preferably performed in the above process of dry-mixing, the stirring rotation speed is 2000-3000 r/min, and the stirring time is preferably 10-20 min.

In another typical embodiment of the present application, an anode electrode material is provided, and the anode electrode material includes the above composite anode electrode material.

The above composite anode electrode material is used as an anode electrode material of a battery, so that the battery has the better electrical properties.

In another typical embodiment of the present application, a lithium ion battery is provided, and includes an anode electrode piece, and the above anode electrode piece includes the above anode electrode material.

The lithium ion battery including the above anode electrode material has the better electrical properties.

The beneficial effects of the present application are described below in combination with specific embodiments and Conparative examples.

### Embodiment 1

In a rotary furnace (the rotation speed of a furnace tube was 2 r/min), 5(NH₄)₂O•12WO₃•5H₂O (the feeding speed was 50 g/min) was used as a raw material, and NH₃ (5 L/min) was fed to generate H₂ at 800°C (the heating rate was 5°C /min) so that a paratungstic acid was reduced to a defect-type purple tungsten oxide (WO_{2.72}), the defect-type purple tungsten oxide was sieved (a sieving screen was 100 meshes), the average particle size of primary particles was 200 nm, and the average particle size of the obtained defect-type purple tungsten oxide WO_{2.72} (secondary particle) was 2.0 µm.

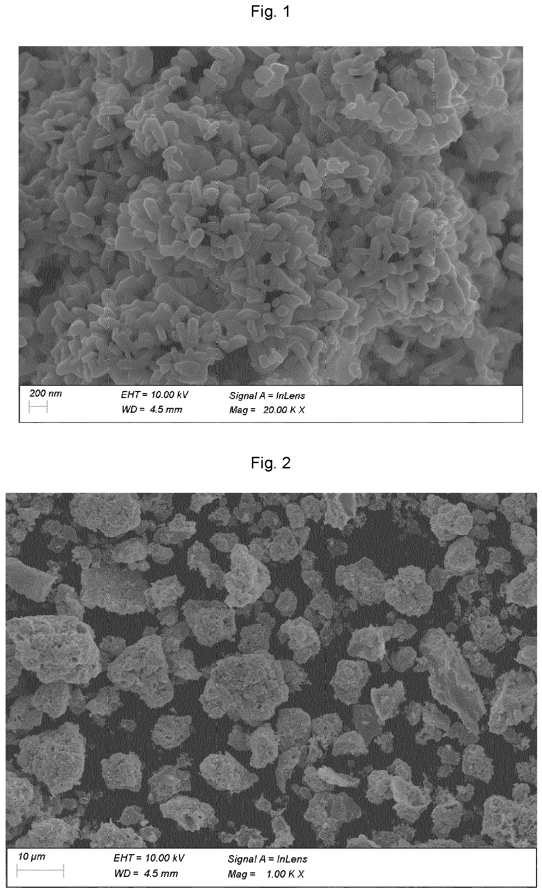

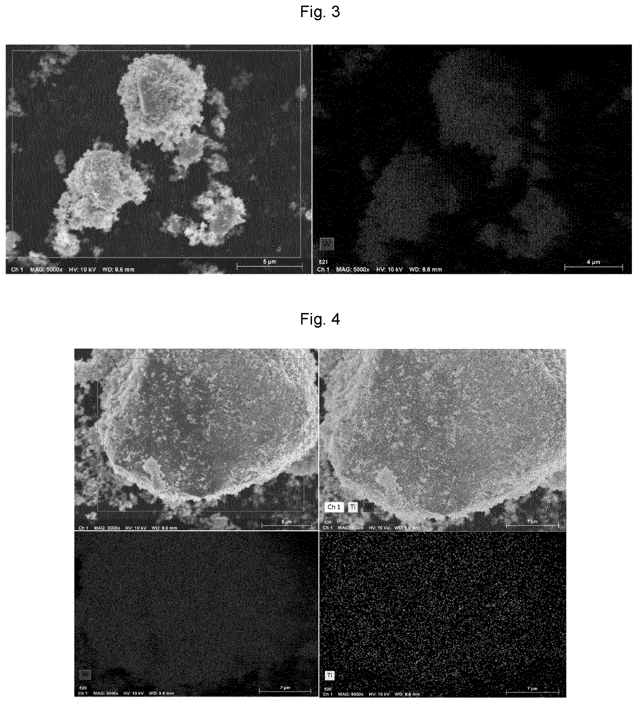

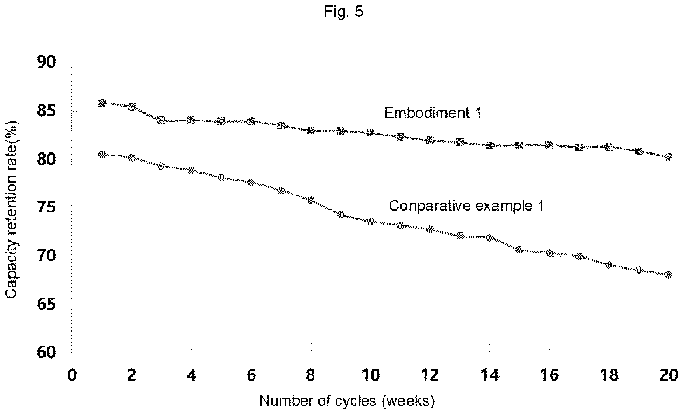

The defect-type purple tungsten oxide WO_{2.72} and Li₄Ti₅O₁₂ were mixed in a high-speed mixer, the rotation speed was 2000 r/min, the mixing time was 10 min, and finally a composite anode electrode material of lithium titanate (the average particle size was 100 nm) and purple tungsten was obtained, wherein the mass ratio of the defect-type purple tungsten oxide WO_{2.72} to Li₄Ti₅O₁₂ was 1:0.01. Herein, an SEM diagram of WO_{2.72} was shown in Fig. 1; an SEM diagram of the composite anode electrode material was shown in Fig. 2; an energy spectrum analysis diagram of WO_{2.72} was shown in Fig. 3; an energy spectrum analysis diagram of the composite anode electrode material was shown in Fig. 4; and a diagram of a capacity retention rate after cycling of the composite anode electrode material was shown in Fig. 5.

### Embodiment 2

The difference between Embodiment 2 and Embodiment 1 was that:
Defect-type purple tungsten oxide WO_{2.72} (secondary particle) and Li₄Ti₅O₁₂ were mixed in a high-speed mixer, and the rotation speed was 3000 r/min, to finally obtained a composite anode electrode material.

### Embodiment 3

The difference between Embodiment 3 and Embodiment 1 was that:
Defect-type purple tungsten oxide WO_{2.72} (secondary particle) and Li₄Ti₅O₁₂ were mixed in a high-speed mixer, and the rotation speed was 2500 r/min, to finally obtained a composite anode electrode material.

### Embodiment 4

The difference between Embodiment 4 and Embodiment 1 was that:
Defect-type purple tungsten oxide WO_{2.72} (secondary particle) and Li₄Ti₅O₁₂ were mixed in a high-speed mixer, and the rotation speed was 1000 r/min, to finally obtained a composite anode electrode material.

### Embodiment 5

The difference between Embodiment 5 and Embodiment 1 was that:
The average particle size of the primary particles was 300 nm, and the average particle size of the defect-type purple tungsten oxide WO_{2.72} was 3.5 µm, to finally obtained a composite anode electrode material.

### Embodiment 6

The difference between Embodiment 6 and Embodiment 1 was that:
The average particle size of the primary particles was 500 nm, and the average particle size of the defect-type purple tungsten oxide WO_{2.72} was 5 µm, to finally obtained a composite anode electrode material.

### Embodiment 7

The difference between Embodiment 7 and Embodiment 1 was that:
The average particle size of the primary particles was 100 nm, and the average particle size of the defect-type purple tungsten oxide WO_{2.72} was 0.1 µm, to finally obtained a composite anode electrode material.

### Embodiment 8

The difference between Embodiment 8 and Embodiment 1 was that:
The average particle size of the lithium titanate was 200 nm, to finally obtained a composite anode electrode material.

### Embodiment 9

The difference between Embodiment 9 and Embodiment 1 was that:
The average particle size of the lithium titanate was 300 nm, to finally obtained a composite anode electrode material.

### Embodiment 10

The difference between Embodiment 10 and Embodiment 1 was that:
The average particle size of the lithium titanate was 400 nm, to finally obtained a composite anode electrode material.

### Embodiment 11

The difference between Embodiment 11 and Embodiment 1 was that:
The stirring time was 20 min, to finally obtained a composite anode electrode material.

### Embodiment 12

The difference between Embodiment 12 and Embodiment 1 was that:
The stirring time was 8 min, to finally obtained a composite anode electrode material.

### Embodiment 13

The difference between Embodiment 13 and Embodiment 1 was that:
The mass ratio of the defect-type purple tungsten oxide WO_{2.72} to the lithium titanate was 1:0.005, to finally obtained a composite anode electrode material.

### Embodiment 14

The difference between Embodiment 14 and Embodiment 1 was that:
The mass ratio of the defect-type purple tungsten oxide WO_{2.72} to the lithium titanate was 1:0.03, to finally obtained a composite anode electrode material.

### Embodiment 15

The difference between Embodiment 15 and Embodiment 1 was that:
The mass ratio of the defect-type purple tungsten oxide WO_{2.72} to the lithium titanate was 1:0.004, to finally obtained a composite anode electrode material.

### Embodiment 16

The difference between Embodiment 16 and Embodiment 1 was that:
The mass ratio of the defect-type purple tungsten oxide WO_{2.72} to the lithium titanate was 1:0.035, to finally obtained a composite anode electrode material.

### Embodiment 17

The difference between Embodiment 17 and Embodiment 1 was that:
Y₂O_{3.12} (the average particle size of the secondary particles was 2.0 µm) was used to replace the defect-type purple tungsten oxide WO_{2.72}, to finally obtained a composite anode electrode material.

### Conparative example 1

The difference between Conparative example 1 and Embodiment 1 was that the defect-type purple tungsten oxide WO_{2.72} was directly used as an anode electrode material, and a diagram of a capacity retention rate after cycling of the anode electrode material was shown in Fig. 5.

Please list the average particle sizes and the specific surface areas of the composite anode electrode materials in Embodiments 1 to 17 and the anode electrode material obtained in Conparative example 1 in Table 1 respectively.

**Table 1**

| Embodiment/ Conparative example | Average particle size of anode electrode material/µm | Specific surface area of anode electrode material /m²/g |
|---|---|---|
| Embodiment 1 | 2.0 | 30.0 |
| Embodiment 2 | 2.2 | 30.2 |
| Embodiment 3 | 2.1 | 30.5 |
| Embodiment 4 | 2.6 | 26.2 |
| Embodiment 5 | 3.5 | 23.1 |
| Embodiment 6 | 5.0 | 15.0 |
| Embodiment 7 | 0.1 | 50.0 |
| Embodiment 8 | 2.1 | 30.0 |
| Embodiment 9 | 2.3 | 29.3 |
| Embodiment 10 | 2.4 | 27.3 |
| Embodiment 11 | 2.1 | 30.1 |
| Embodiment 12 | 2.3 | 27.2 |
| Embodiment 13 | 2.0 | 30.1 |
| Embodiment 14 | 2.1 | 30.2 |
| Embodiment 15 | 2.0 | 29.3 |
| Embodiment 16 | 2.2 | 31.1 |
| Embodiment 17 | 2.0 | 30.1 |
| Conparative example 1 | 2.0 | 25.1 |

10.0 g of the composite anode electrode materials prepareded in Embodiments 1 to 17 and the anode electrode material obtained in Conparative example 1 were respectively weighed, stirred and mixed with 0.1579 g of an acetylene black (SP) for 3 min at a stirring speed of 800 r/min in a defoaming machine; then 15.79 g of CMC glue with a solid content of 1% was added, and mixed at 2000 r/min for 10min; and 0.4386 g of binder emulsion with a model type of SN307 was added, and stirred and mixed for 3 min at a stirring speed of 2000 r/min in the defoaming machine. A slurry material obtained finally was uniformly coated on a copper foil, and dried at 80 °C. A dried electrode piece was cutted into a circular piece with a diameter of 14 mm, and a lithium piece was used as an anode electrode. A button battery with a model type of 2032 was assembled in a glove box, the discharge capacity and the capacity retention rate after cycling of each button battery at 0.1 C were tested under 2.0 V, and test results were listed in Table 2.

**Table 2**

| Embodiment/Conparative example | Discharge capacity/mAh/g | Capacity retention rate after cycling/% |
|---|---|---|
| Embodiment 1 | 766 | 82.0 |
| Embodiment 2 | 780 | 83.1 |
| Embodiment 3 | 768 | 83.4 |
| Embodiment 4 | 740 | 78.1 |
| Embodiment 5 | 769 | 85.9 |
| Embodiment 6 | 796 | 85.4 |
| Embodiment 7 | 734 | 78.1 |
| Embodiment 8 | 772 | 83.2 |
| Embodiment 9 | 765 | 82.1 |
| Embodiment 10 | 732 | 78.3 |
| Embodiment 11 | 768 | 83.1 |
| Embodiment 12 | 743 | 78.1 |
| Embodiment 13 | 801 | 85.1 |
| Embodiment 14 | 740 | 83.4 |
| Embodiment 15 | 811 | 77.9 |
| Embodiment 16 | 730 | 78.0 |
| Embodiment 17 | 721 | 85.0 |
| Conparative example 1 | 830 | 67.0 |

From the above descriptions, it may be seen that the above embodiments of the present disclosure achieve the following technical effects.

The electrical conductivity of the defect-type transition metal oxide is improved compared with the corresponding conventional transition metal oxide, but it also has the higher chemical activity at the same time due to the crystal distortion of the defect-type transition metal oxide, thereby it is easy to perform a side reaction with an electrolyte so that the electrical performance of the lithium ion battery is affected. On the one hand, the present application uses the lithium titanate to coat and dope the defect-type transition metal oxide so that the structure of the defect-type transition metal oxide is more stable, and the coated lithium titanate reduces the area of the defect-type transition metal oxide that is in direct contact with the electrolyte, thereby the probability of a side reaction between the defect-type transition metal oxide and the electrolyte is greatly reduced. On the other hand, the "zero strain" of the lithium titanate greatly reduces the volume expansion effect of an anode electrode of a battery in the process of deintercalating lithium ions, thereby the stability of the composite anode electrode material is further improved, and the lithium ion battery including the composite anode electrode material has a higher capacity retention rate after cycling.

The above are only preferred embodiments of the present disclosure, and are not intended to limit the present disclosure. For those skilled in the art, the present disclosure may have various modifications and changes. Any modifications, equivalent replacements, improvements and the like made within the spirit and principle of the present disclosure shall be included within a scope of protection of the present disclosure.

## Claims

1. A composite anode electrode material, wherein the composite anode electrode material comprises a defect-type transition metal oxide and a lithium titanate, wherein the lithium titanate is compounded with the defect-type transition metal oxide in the manner of coating and/or doping, the defect-type transition metal oxide is a secondary particle, and a transition metal element in the defect-type transition metal oxide is selected from any one of tungsten, yttrium and tin.

2. The composite anode electrode material according to claim 1, wherein the mass ratio of the defect-type transition metal oxide to the lithium titanate is 1:0.005-1:0.03.

3. The composite anode electrode material according to claim 1 or 2, wherein the defect-type transition metal oxide is selected from any one of a defect-type tungsten oxide, a defect-type yttrium oxide, and a defect-type tin oxide.

4. The composite anode electrode material according to claim 1 or 2, wherein the average particle size of the composite anode electrode material is 2.0-5.0 µm, and the specific surface area of the composite anode electrode material is 15.0-50.0 m²/g.

5. The composite anode electrode material according to claim 1, wherein the average particle size of the secondary particles is 2.0-5.0 µm, the secondary particle of the defect-type transition metal oxide is formed by agglomeration of primary particles, and the average particle size of the primary particles is 200-500 nm.

6. The composite anode electrode material according to claim 1, wherein the average particle size of the lithium titanate is 100-300 nm.

7. A preparation method for the composite anode electrode material according to any one of claims 1 to 6, wherein the preparation method comprises: dry-mixing a defect-type transition metal oxide and a lithium titanate, to obtain the composite anode electrode material, wherein the defect-type transition metal oxide is a secondary particle.

8. The preparation method for the composite anode electrode material according to claim 7, wherein stirring is performed in the process of dry-mixing, the stirring rotation speed is 2000-3000 r/min, and the stirring time is 10-20 min.

9. An anode electrode material, wherein the anode electrode material comprises the composite anode electrode material according to any one of claims 1 to 6.

10. A lithium ion battery, comprising an anode electrode piece, wherein the anode electrode piece comprises the anode electrode material according to claim 9.
